Europäisches Patentamt

European Patent Office

Office européen des brevets

(11) Publication number : - **0 123 508**
**B1**

## (12) EUROPEAN PATENT SPECIFICATION

(45) Date of publication of patent specification :
30.12.86

(21) Application number : **84302629.5**

(22) Date of filing : **18.04.84**

(51) Int. Cl.⁴ : **B 60 J** **5/14, B 60 P** **3/20**

(54) **Thermally insulated shutter.**

(30) Priority : **21.04.83 GB 8310816**
**19.03.84 GB 8407079**

(43) Date of publication of application :
**31.10.84 Bulletin 84/44**

(45) Publication of the grant of the patent :
**30.12.86 Bulletin 86/52**

(84) Designated contracting states :
**AT BE CH DE FR IT LI LU NL SE**

(56) References cited :
FR-A- 1 527 579
US-A- 2 612 028
US-A- 2 657 088
US-A- 3 056 451

(73) Proprietor : **DOVER ROLLER SHUTTERS LIMITED**
**Nyloy Works Hartford Street**
**Denton Manchester M34 3FR (GB)**

(72) Inventor : **Dover, Frederick George**
**Wharmton House 139 Manchester Road**
**Greenfield Oldham Lancashire OL3 7HJ (GB)**

(74) Representative : **Funge, Harry et al**
**M'CAW & CO. 41-51 Royal Exchange Cross Street**
**Manchester M2 7BD (GB)**

## Description

This invention relates to operable shutters, and has particular, though not exclusive, application to roller shutters of the type used extensively in motor vehicles such as vans and lorries. In such vehicles the roller shutters provide access to the load carrying space of the vehicle. Roller shutter doors of this type are generally provided at the rear of the vehicle, although in some cases they may be provided at one or more sides of the vehicle in addition to or as an alternative to such a door at the rear of the vehicle.

Roller shutters of the type to which the present invention relates comprise a plurality of elongate laths joined together along their long edges by means of hinges to form a door of rectangular form. The shutter is guided by generally vertical channel members so as to be able to be raised or lowered to open or close the door. In opening the door a cable or the like is wound on a roller located behind a headboard and the laths move successively into a location adjacent the roof of the vehicle.

Some vehicles are used for the transportation of perishable and frozen foodstuffs, and such vehicles are provided with refrigeration devices operable to maintain the interior of the vehicle, and its contents, at a depressed temperature relative to the ambient temperature.

It is obviously desirable to thermally insulate such vehicles and there have been proposals for the insulation of the walls and roof of the vehicle and also for the insulation of a roller shutter door of such a vehicle. For example in GB Patent No 1341559 there is described an insulated panel suitable for use as a wall or roof of a refrigerated vehicle. Such a panel comprises an aluminium extrusion of channel section having a foam material of thickness at least equal to the depth of the channel bonded thereto. A high density foam material is used, preferably 10 to 25 lbs/cu. ft. (160 to 400 Kg/m³) in order to withstand impact without substantial damage. II a lower density foam material is used for better insulation purposes, a surface layer of metal, plastics material or the like is bonded to the exposed surface of the foam material to form a laminate therewith. This adds to the cost and weight of the shutter door and the weight of a metal layer could adversely affect the bonding of the foam material to the aluminium extrusion.

In GB patent 1346568 there is described an insulated roller shutter door. In one embodiment each lath is a box section of aluminium, the interior of which is low density foam filled, i. e. 1.5 to 6 lb/cu. ft. (24 to 96 Kg/m³). This forms a sandwich construction similar to that described above, but has the added disadvantage that the top and bottom of the box-section provide a thermal path reducing the effectiveness of the insulated shutter door. In another embodiment the foam material is bonded to one side of the aluminium extrusion, but in this case a high density foam material is used, preferably 20 to 25 lb/cu. ft (320 to 400 Kg/m³) for minimising impact damage.

Another problem associated with roller shutters when fitted to refrigerated vehicles lies in the fact that the side edges of the shutters cannot be located too securely in the aforementioned guide channels if the shutters are to operate smoothly and relatively easily. In consequence thermal sealing of the edges is generally inadequate and this is aggravated by the vibration of the shutters as the vehicle moves creating a bellows effect, thereby transferring warm air into and/or cold air out of the interior of the vehicle.

It is an object of the present invention to provide an operable shutter which is thermally insulated to a higher standard than the known roller shutters, and which is relatively simple and inexpensive to produce.

The invention provides a shutter lath comprising an elongate channel section of a rigid material and within said channel section a layer of a plastics foam material having a thickness at least as great as the depth of said channel section, said layer comprising a laminate formed of a first foam material having a relatively low density located adjacent said channel section and a second material which is bonded to said first material at that side thereof remote from said channel section characterised in that the second material is a foam material having a relatively high density.

Preferably said first material has a thickness substantially equal to the depth of said channel section, and said second material may have a thickness at least as great as, and preferably substantially equal to, the thickness of said first material. Each material may have a thickness of substantially 20 mm.

The channel section may be formed having a formation along each longitudinal edge thereof, each formation being adapted to cooperate with the formation along the opposed edge of a like channel section to form an elongate hinge between said channel sections. One of said formations may comprise a rib of substantially circular cross-section and the other of said formations may comprise a channel of substantially circular cross-section adapted to receive a said rib therein.

The invention also provides a roller shutter comprising a plurality of such laths hingedly joined to each other in edge-to-edge relationship. Said roller shutter may be mounted in an opening which has an upstanding guide channel at each side thereof adapted to receive the ends of said laths therein. Each guide channel may have an elongate lip seal of an elastomeric material at each of the opposed sides of said laths. Each guide channel may also have an elongate brush seal at that side of said guide channel adjacent that side of said laths remote from said channel sections. Said brush seal may be interior of said guide channel relative to the lip seal on that side of said guide channel. Preferably said guide channel is formed of two L-shaped members each having web portions of reduced thickness which are overlapped in use. Said guide channel may also comprise a further channel member adapted to receive therein wheels rotatably secured to the ends of said laths.

One embodiment of roller shutter will now be described with reference to the accompanying drawings in which :

Figure 1 is a vertical end section through two laths in cooperating relationship,

Figure 2 is a vertical end section through the lowermost lath of a roller shutter, and,

Figure 3 is a horizontal section through one end of a lath located in a guide channel.

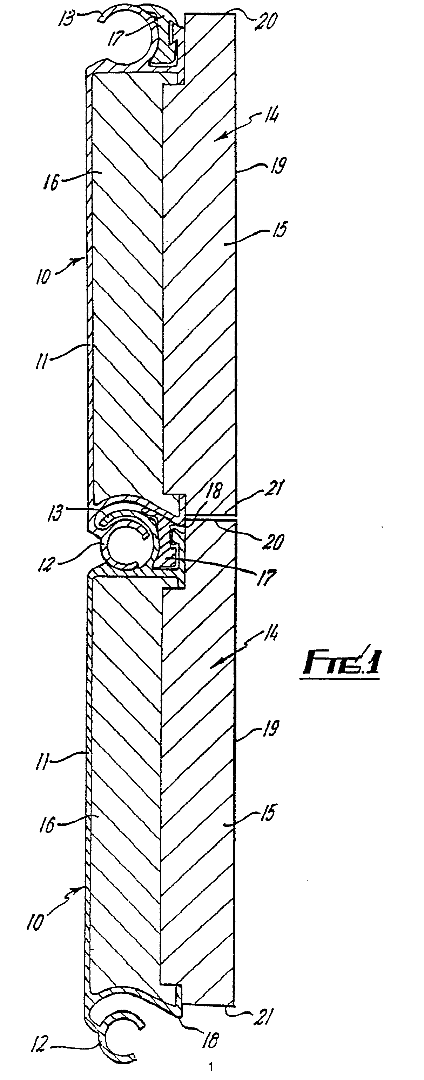

Referring now to Fig. 1 each lath 10 comprises a shallow channel section 11 of aluminium which is formed along one long edge with a circular section protrusion 12 and along the other long edge with a cooperating circular socket section 13. The outside diameter of the protrusion 12 is such as to form a rotatable fit within the socket section 13 so that adjacent laths 10 can be hingedly joined to form a complete shutter. In practice the section 11 will take the form of a long extrusion which is cut off to a length appropriate to the width of the required shutter. In the particular arrangement shown, the aluminium will form the inside surface of the shutter — i. e. facing the interior of the vehicle — although it will be clear that the arrangement of the hinged connection 12/13 could be altered to reverse this. Formed immediately next to the socket section 13 is a shaped re-entrant section adapted to retain a flexible sealing strip 17 against which the nose 18 of the next adjacent lath 10 bears to provide a seal between adjacent laths 10.

Moulded within the channel section 11 is a layer 14 of foam material, for example two-part polyurethane foam comprising a filler and an isocyanate hardner. The layer 14 comprises two sub-layers 15 and 16, the outer layer 15 being of relatively high density foam for durability, the inner layer 16 being of lower density foam for good thermal insulation. The outside face of the outer layer 15 is formed during manufacture with a thin skin 19, approximately 1/16" (1.6 mm) thick, of solid material which can be painted or otherwise finished as desired.

It will be seen that the total thickness of the foam layer 14 is such that the foam extends beyond the confines of the channel 11. Preferably, as shown, the thickness of the low density layer 15 is substantially equal to the depth of the channel section 11 and the high density layer 16 provides impact damage protection to that low density layer 15. This not only gives improved insulation because of the increased thickness of foam, but also enables squared-off edges 20, 21 to be formed of the high density foam material which, when the shutter is in the down position (i. e. as shown) defines between them a very narrow air gap between adjacent laths 10 which improves insulation at the joint which would otherwise be uninsulated as far as the foam is concerned. The thickness of the two sub-layers 15, 16 are substantially equal so that a good compromise is achieved between the good thermal properties of the low density foam and an adequate thickness of high density foam for impact resistance purposes.

For a typical section of shutter having a layer 14 of 41.00 mm thickness, the thermal conductivity was measured to be 0.044 ± 0.004 W/mK with a mean temperature differential across the sample of 24.5 °C.

A convenient method of manufacture will now be briefly described. First the outer sub-layer 15 is moulded by pouring a suitable foamable mixture into an elongate shallow tray mould (not shown), having reentrant upper edges to give the raised central strip in this layer 15 shown in Fig. 1. After hardening the tray mould may be removed and the aluminium section 11 is then placed onto the sub-layer 15 to thus define an elongate chamber into which material for the sub-layer 16 is poured or injected. With a suitably proportioned mix for the sub-layer 15 the skin 19 on its outer surface is formed automatically and simply requires finishing as desired.

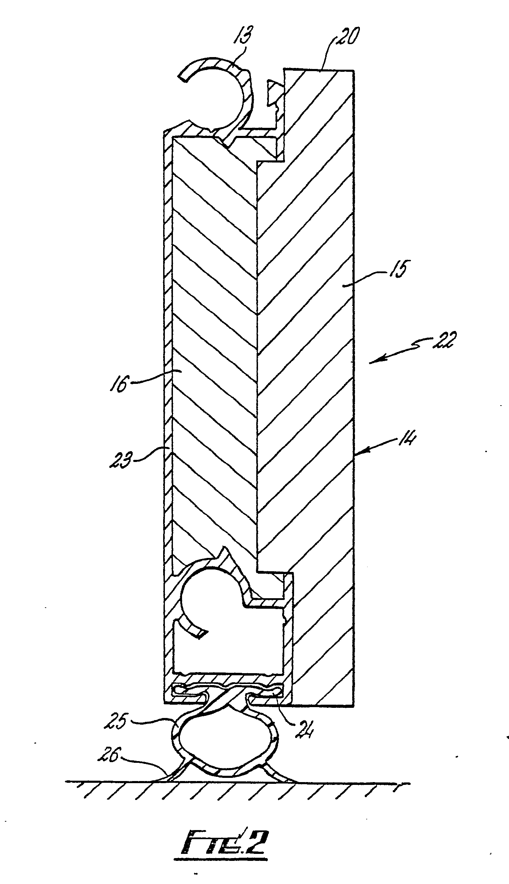

Referring now to Fig. 2 the lowermost lath 22 is formed in like manner to laths 10 described above. In this case however the lower longitudinal edge of the channel section 23 is formed differently from that of channel sections 11, and has a channel formation 24 into which a gasket 25 is received. The gasket 25 is of an elastomeric material, for example a natural or synthetic rubber material, and is of circular section with two depending « legs » 26 so that a good thermal seal is formed between the roller shutter and the floor of the opening in which the roller shutter is fitted.

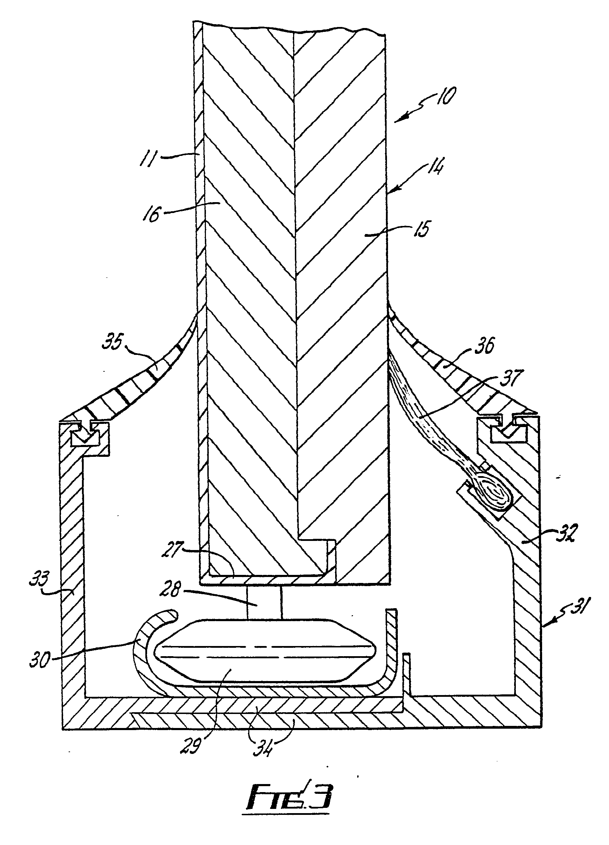

Referring now to Fig. 3 there is shown in plan view the channel section 11 of a lath 10. Secured to the side edge 27 of the channel section 11 is a stub shaft 28, of a suitable material such as stainless steel, on which is rotatably mounted a guide wheel 29 having a nylon tyre. The guide wheel 29 runs in a guide track 30 which is located within a guide channel 31. A guide channel 31 is fitted to be upstanding at each side of an opening to which the roller shutter is fitted so that the laths 10 can run freely up and down in the opening.

For ease of assembly the guide channel 31 comprises two L-shaped members 32, 33 each having a web portion 34 of reduced thickness so as to overlap in use and form a guide channel 31 of substantially uniform thickness. The L-shaped member 33 which in use is to the interior of the roller shutter has a lip seal 35 secured thereto to form a seal against the channel sections 11 of laths 10. The other L-shaped member 32 which in use is to the exterior of the roller shutter has a lip seal 36 and a brush seal 37 secured thereto to form a seal against the outer surface 19 of the foam layer 15. The lip seals 35, 36 are of an elastomeric material, i. e. a natural or synthetic rubber, and provide the main sealing effect. However, although additional sealing has been found desirable, additional lip seals restrict the easy raising and lowering of the roller shutter. Brush seals provide inadequate sealing on their own and in consequence the lip seals 35, 36 and the brush seal 37 are found to provide better sealing than lip seals or brush seals alone but still enable easy raising and lowering of the roller shutter.

In addition to the very good thermal sealing of an opening in a refrigerated vehicle, cold room or the like the roller shutter of the present invention provides a relatively simple and inexpensive product and one which is easy and convenient in use. The provision of the elongate hinge formations along the longitudinal edges of the laths 10 provides a strong hinge which is not prone to being strained in use, as occurs with conventional separate hinges. In addition, the use of separate hinges usually requires the use of bolts, rivets or the like passing through the laths thereby causing « cold-bridges » and reducing the effective insulation properties of the roller shutter. The present arrangement avoids this problem and enables a good thermal insulation in the region of the hinges to be provided. The insulated laths of the present invention provide a relatively simple and inexpensive product to produce and assemble to any required size. The insulation properties of the present roller shutter are higher than known roller shutters of similar dimensions and cost, the provision of substantially equal thicknesses of foam of low and high density ensuring an optimum compromise between good insulation properties and resistance to impact damage.

## Claims

1. A shutter lath (10) comprising an elongate channel section (11) of a rigid material and within said channel section (11) a layer (14) of a plastics foam material having a thickness at least as great as the depth of said channel section (11), said layer (14) comprising a laminate formed of a first foam material (16) having a relatively low density located adjacent said channel section (11) and a second material which is bonded to said first material (16) at that side thereof remote from said channel section (11) characterised in that said second material is a foam material (15) having a relatively high density.

2. A shutter lath according to claim 1, characterised in that said first material (16) has a thickness substantially equal to the depth of said channel section (11).

3. A shutter lath according to claim 1 or 2, characterised in that said second material (15) has a thickness at least as great as the thickness of said first material (16).

4. A shutter lath according to any one of claims 1 to 3, characterised in that said channel section (11) is formed having a formation (12, 13) along each longitudinal edge thereof, each formation (12) being adapted to cooperate with the formation (13) along the opposed edge of a like channel section (11) to form an elongate hinge between said channel section (11).

5. A shutter lath according to claim 4, characterised in that one of said formations (12) comprises a rib of substantially circular cross-section and the other of said formations (13) comprises a channel of substantially circular cross-section adapted to receive said rib (12) therein.

6. A shutter lath according to claim 4 or 5, characterised in that one of said formations comprises a re-entrant section having a flexible sealing strip (17) located therein.

7. A roller shutter comprising a plurality of laths according to any one of claims 1 to 6, characterised in that said laths (10) are hingedly joined to each other in edge-to-edge relationship, and characterised by a pair of spaced guide channels (31) having an upstanding disposition, each being adapted to receive one end of each of said laths (10) therein.

8. A roller shutter and guide channels according to claim 7, characterised in that the guide channels (31) each comprise an elongate lip seal (35, 36) of an elastomeric material disposed at each of the opposed sides of said laths (10).

9. A roller shutter and guide channels according to claim 8, characterised in that the guide channels (31) each comprise an elongate brush seal (37) disposed at that side of said laths (10) remote from said channel sections (11), with said brush seal (37) being interior of said guide channel (31) relative to the lip seal (36) on that side of said guide channel (31).

10. A roller shutter and guide channels according to any one of claims 7 to 9, characterised in that each guide channel (31) comprises two L-shaped members (32, 33) each having a web portion (34) of reduced thickness which are overlapped in use, and a further channel member (30) adapted to receive therein wheels (29) rotatably secured to the ends of said laths (10).

## Patentansprüche

1. Für eine Lamellentür bestimmte Lamelle (10), bestehend aus einem langgestreckten kanalartigen Profil (11) aus steifem Werkstoff und einer innerhalb des Profils (11) befindlichen Schicht (14) aus Schaumkunststoff, deren Dicke mindestens der Tiefe des Profils (11) entspricht, wobei die Schicht (14) aus einem Laminat besteht, das einen ersten, benachbart zu dem Profil (11) angeordneten Schaumstoff (16) geringer Dichte sowie einen zweiten Werkstoff aufweist, der mit dem ersten Werkstoff (16) an dessen von dem Profil (19) abgewandter Seite verbunden ist, dadurch gekennzeichnet, daß der zweite Werkstoff ein Schaumstoff (15) mit relativ hoher Dichte ist.

2. Lamelle nach Anspruch 1, dadurch gekennzeichnet, daß die Dicke der aus dem ersten Werkstoff (16) bestehenden Schicht im wesentlichen der Tiefe des Profils (11) entspricht.

3. Lamelle nach Anspruch 1 oder 2, dadurch gekennzeichnet, daß die aus dem zweiten Werkstoff (15) bestehende Schicht mindestens so dick ist wie die Schicht aus dem ersten Werkstoff (16).

4. Lamelle nach einem der Ansprüche 1 bis 3, dadurch gekennzeichnet, daß das Profil (11) an jeder seiner Längskanten ein Formteil (12, 13) aufweist, wobei jedes Formteil (12) so gestaltet ist, daß es mit dem Formteil (13) an der gegenüberliegenden Kante eines gleichen Profils (11) zusammenwirkt, so daß zwischen den Profilen (11) ein Längsscharnier entsteht.

5. Lamelle nach Anspruch 4, dadurch gekennzeichnet, daß eines der Formteile (12) eine Rippe mit im wesentlichen rundem Querschnitt und das andere Formteil (13) eine Vertiefung mit im wesentlichen rundem Querschnitt aufweist, welche zur Aufnahme der Rippe (12) ausgebildet ist.

6. Lamelle nach Anspruch 4 oder 5, dadurch gekennzeichnet, daß eines der Formteile eine Einbuchtung aufweist, in der sich ein elastischer Dichtungsstreifen (17) befindet.

7. Lamellentür mit einer Vielzahl von Lamellen nach einem der Ansprüche 1 bis 6, dadurch gekennzeichnet, daß die Lamellen (10) an ihren Kanten gelenkig verbunden sind, und weiterhin gekennzeichnet, durch ein Paar von mit Abstand angeordneten, aufrecht verlaufenden Führungskanälen (31), die zur Aufnahme jeweils eines Endes jeder Lamelle (10) ausgebildet sind.

8. Lamellentür und Führungskanäle nach Anspruch 7, dadurch gekennzeichnet, daß jeder Führungskanal (31) eine langgestreckte Lippendichtung (35, 36) aus einem Elastomer aufweist, wobei die Lippendichtungen jeweils an den gegenüberliegenden Seiten der Lamellen (10) vorgesehen sind.

9. Lamellentür und Führungskanäle nach Anspruch 8, dadurch gekennzeichnet, daß jeder Führungskanal (31) eine langgestreckte Bürstendichtung (37) aufweist, die an der von dem Profil (11) abgewandten Seite der Lamellen (10) vorgesehen und innerhalb des Führungskanals (31) angeordnet ist, der sich auf der Seite der Lippendichtung (36) befindet.

10. Lamellentür und Führungskanäle nach einem der Ansprüche 7 bis 9, dadurch gekennzeichnet, daß jeder Führungskanal (31) zwei L-förmige Teile (32, 33) aufweist, die jeweils einen Abschnitt (34) reduzierter Dicke haben, wobei sich die beiden Abschnitte (34) überlappen, und daß jeder Führungskanal (31) ein weiteres Führungsprofil (30) aufweist, das zur Aufnahme von Rollen (29) ausgebildet ist, die an den Enden der Lamellen (10) drehbar gelagert sind.

## Revendications

1. Latte de fermeture (10) comportant un profilé allongé en U (11) en matériau rigide et dans ce profilé en U (11) une couche (14) de matériau en mousse plastique ayant une épaisseur au moins aussi grande que la profondeur du profilé en U (11), ladite couche (14) comprenant un stratifié formé d'une première matière en mousse (16) ayant une densité relativement basse située de manière adjacente au profilé en U (11) et une seconde matière qui est fixée à ladite première matière (16) sur le côté de celle-ci éloigné du profilé en U (11).

2. Latte de fermeture selon la revendication 1, caractérisée en ce que ladite première matière (16) a une épaisseur à peu près égale à la profondeur du profilé en U (11).

3. Latte de fermeture selon la revendication 1 ou 2, caractérisée en ce que ladite seconde matière (15) a une épaisseur au moins aussi grande que l'épaisseur de ladite première matière (16).

4. Latte de fermeture selon l'une quelconque des revendications 1 à 3, caractérisée en ce que le profilé en U (11) est formé de manière à avoir un prolongement (12, 13) le long de chacun de ses bords longitudinaux, chaque prolongement (12) étant adapté pour coopérer avec le prolongement (13) le long du bord opposé d'un profilé en U semblable, pour former une charnière allongée entre les profilés en U (11).

5. Latte de fermeture selon la revendication 4, caractérisée en ce que l'un des prolongements (12) comporte une nervure de section transversale à peu près circulaire et l'autre des prolongements (13) comprend un profilé de section transversale à peu près circulaire adapté pour recevoir intérieurement ladite nervure (12).

6. Latte de fermeture selon la revendication 4 ou 5, caractérisée en ce que l'un desdits prolongements comprend une partie rentrante à l'intérieur de laquelle est logée une bande (17) d'étanchéité souple.

7. Fermeture à rouleau comprenant plusieurs lattes selon l'une quelconque des revendications 1 à 6, caractérisée en ce que les lattes (10) sont reliées l'une à l'autre, bord à bord, tournant sur une charnière, et caractérisée en ce qu'elle comporte une paire de profilés en U (31) servant de guide, disposés verticalement, chacun étant adapté pour recevoir intérieurement une extrémité de chacune des lattes (10).

8. Fermeture à rouleau et profilés en U de guidage selon la revendication 7, caractérisés en ce que lesdits profilés en U de guidage (31) comportent chacun un joint à lèvre allongé (35, 36) en matière élastomère, disposé à chacun des côtés opposés des lattes (10).

9. Fermeture à rouleau et profilés en U de guidage selon la revendication 8, caractérisés en ce que les profilés en U de guidage (31) comportent chacun un joint à brosse allongé (37) disposé du côté des lattes (10) éloigné desdits profilés en U (11), le joint à brosse (37) étant à l'intérieur du profilé en U de guidage (31) par rapport au joint à lèvre (36), sur le même côté dudit profilé en U de guidage (31).

10. Fermeture à rouleau et profilés en U de guidage selon l'une quelconque des revendications 7 à 9, caractérisés en ce que chaque profilé en U de guidage (31) comprend deux éléments (32, 33) en forme de L chacun ayant une partie formant âme (34) d'épaisseur réduite, qui, en place, sont superposés, et en outre un élément profilé (30) adapté pour recevoir intérieurement des roues (29) fixées de manière rotative aux extrémités des lattes (10).

0 123 508

FIG.1

FIG.2

FIG.3